# EUROPÄISCHE PATENTSCHRIFT

(11) **EP 3 926 137 B1**
(45) Veröffentlichungstag und Bekanntmachung des Hinweises auf die Patenterteilung: **06.08.2025**
(21) Anmeldenummer: 20180010.9
(22) Anmeldetag: 15.06.2020
(51) Int. Cl.: E05F 3/22

(54) **MONTAGEKONSOLE FÜR EINEN TÜRBETÄTIGER**
ASSEMBLY BRACKET FOR A DOOR ACTUATOR
CONSOLE DE MONTAGE POUR UN ACTIONNEUR DE PORTE

(43) Veröffentlichungstag der Anmeldung: 22.12.2021
(73) Patentinhaber: dormakaba Deutschland GmbH, 58256 Ennepetal (DE)
(72) Erfinder: Hellwig, Alexander, 58256 Ennepetal (DE); Salutzki, Thomas, 58256 Ennepetal (DE); Wiemann, Sabine, 58256 Ennepetal (DE)
(74) Vertreter: Balder IP Law, S.L.

(56) Entgegenhaltungen:
- EP-A1- 3 425 150
- WO-A1-2010/144078
- DE-A1- 4 406 938
- DE-U1- 29 880 074
- ES-A1- 2 320 068
- KR-A- 20100 112 513

## Beschreibung

Die Erfindung betrifft eine Montagekonsole für einen Türbetätiger.

Türbetätiger werden dazu verwendet, Türen zu schließen und/oder zu öffnen. Als Türbetätiger werden insbesondere Türschließer und Türantriebe bezeichnet. Beim Türschließer wird im Regelfall durch die manuelle Öffnungsbewegung ein Federspeicher geladen. Die dabei gespeicherte Energie wird zum Schließen der Tür genutzt. Beim Türantrieb kann beispielsweise mittels Elektromechanik oder Hydraulik die Tür selbstständig geöffnet und/oder geschlossen werden. Türbetätiger werden üblicherweise auf dem Türblatt oder der Zarge bzw. Wand befestigt. Für die Befestigung der Türbetätiger werden meist Montageplatten verwendet. Die Montageplatte wird an ihrer Montagefläche, also der Tür, Zarge oder Wand, befestigt. Der Türbetätiger wiederum wird an der Montageplatte befestigt.

Insbesondere bei Brandschutztüren ist zu beachten, dass in den Türbetätigern oftmals brennbare Fluide, insbesondere Hydrauliköle, zur Anwendung kommen. Durch geeignete Maßnahmen ist möglichst zu vermeiden, dass sich das Fluid im Türbetätiger im Brandfall zu stark erhitzt und gegebenenfalls entzündet.

EP 3 425 150 A1 zeigt eine Türvorrichtung, insbesondere Feststellvorrichtung mit einem Gehäuse und mit einer Auslösevorrichtung, wobei die Auslösevorrichtung dazu dient, bei und/oder oberhalb einer Auslösetemperatur das Gehäuse zu öffnen. Dabei ist vorgesehen, dass die Auslösevorrichtung ein Auslösematerial umfasst, wobei sich das Volumen des Auslösematerials bei und/oder oberhalb der Auslösetemperatur vergrößert.

WO 2010/144078 A1 zeigt eine Vorrichtung zum Vermeiden eines Batteriebrandes in einem elektronischen Türschloss. Dabei ist die Batterie und eine Leiterplatte in einem Gehäuse des elektronischen Türschlosses angeordnet.

Weiteren Stand der Technik zeigen DE 298 80 074 U1, KR 2010 0112513 A, ES 2 320 068 A1 und DE 44 06 938 A1.

Es ist Aufgabe vorliegender Erfindung, eine Montagekonsole für einen Türbetätiger anzugeben, die eine betriebssichere Befestigung des Türbetätigers und gleichzeitig sicherheitsrelevante Anforderungen, insbesondere für den Brandfall, erfüllt.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Die Erfindung beschreibt eine Montagekonsole, die anstatt einer herkömmlichen Montageplatte zur Befestigung des Türbetätigers verwendet wird. Die Montagekonsole weist ein erstes Montageelement und zumindest ein zweites Montageelement auf. Die Montageelemente sind über zumindest eine Verbindungsanordnung miteinander verbunden. Bei entsprechender thermischer Belastung löst sich diese Verbindungsanordnung, so dass sich die beiden Montageelemente voneinander trennen. Dadurch löst sich der Türbetätiger von der Montagefläche, also von der Tür, Zarge oder Wand. Dabei wird insbesondere davon ausgegangen, dass sich der Türbetätiger an der brandabgewandten Seite der Tür befindet. Durch das Ablösen des Türbetätigers von seiner Montagefläche wird vermieden, dass sich der Türbetätiger zu stark erhitzt, wodurch eine Entzündung des Fluids im Türbetätiger vermieden wird.

An der Montagekonsole ist zur Beschreibung von Richtungen eine Montageachse definiert. Die Montageachse steht beispielsweise parallel zu den Schrauben, die zum Anschrauben der Montagekonsole an der Montagefläche verwendet werden. Gemäß einer alternativen Definition steht die Montageachse senkrecht zur Abtriebsachse des Türbetätigers. Gemäß einer weiteren alternativen Definition steht die Montageachse senkrecht zur Montagefläche, also senkrecht zur Oberfläche von der Tür, Zarge oder Wand.

Die Montagekonsole umfasst, wie bereits beschrieben, ein erstes Montageelement und zumindest ein zweites Montageelement. Gemäß einem hier beschriebenen Ausführungsbeispiel sind die beiden Montageelemente Platten bzw. plattenförmige Elemente, die zur Bildung der Montagekonsole aneinander liegen. Gemäß einem zweiten Ausführungsbeispiel werden jedoch mehrere zweite Montageelemente, insbesondere in Form von Buchsen, verwendet, die im ersten Montageelement stecken. Der Übersichtlichkeit halber wird meistens das zweite Montageelement im Singular beschrieben, dabei ist jedoch stets auch offenbart, dass mehrere zweite Montageelemente mit der entsprechenden Ausgestaltung verwendet werden können.

Es ist insbesondere vorgesehen, dass das erste Montageelement mit seiner Rückfläche an der Montagefläche befestigt, insbesondere angeschraubt, wird. Diese Montagefläche ist durch eine Tür, Zarge oder Wand gebildet. Dementsprechend wird das zweite Montageelement mit dem Türbetätiger verbunden. Das zweite Montageelement weist insbesondere eine Vorderfläche auf, an die der Türbetätiger befestigt, insbesondere angeschraubt, wird. Vorzugsweise ist das zweite Montageelement ein eigenständiges Bauteil, an dem der Türbetätiger befestigt wird. Alternativ kann das zweite Montageelement allerdings auch integraler Bestandteil des Türbetätigers sein.

Ferner ist auch die umgekehrte Ausgestaltung möglich, wonach das erste Montageelement zur Aufnahme des Türbetätigers ausgebildet ist und das zweite Montageelement an der Montagefläche befestigt wird.

Die Montagekonsole umfasst zumindest eine Verbindungsanordnung. Insbesondere sind eine, zwei, drei, vier oder fünf solcher Verbindungsanordnungen vorgesehen.

Die einzelne Verbindungsanordnung umfasst wenigstens ein Riegelelement. Das Riegelelement ist am ersten Montageelement beweglich angeordnet. Insbesondere ist das Riegelelement gegenüber dem ersten Montageelement linear beweglich angeordnet. Das erste Montageelement ist insbesondere als Platte ausgebildet und weist dementsprechend eine Plattenebene auf, die senkrecht zur Montageachse steht. Um einen möglichst dünnen Aufbau der Montagekonsole zu erreichen, ist insbesondere vorgesehen, dass sich das Riegelelement parallel zu der Plattenebene und somit senkrecht zu der Montageachse bewegt.

Ferner umfasst die Verbindungsanordnung wenigstens ein Auslöseelement. Das Auslöseelement ist thermisch aktivierbar; insbesondere in einem Temperaturbereich von 90°C bis 200°C. Das "Aktivieren des Auslöseelements" ist gleichbedeutend mit "Auslösen des Auslöseelements". Beispielsweise handelt es sich bei dem Auslöseelement um eine mit Fluid gefüllte Glasampulle, wie sie beispielsweise aus Sprinkleranlagen bekannt ist. Das Auslöseelement ist so ausgebildet, dass es bei entsprechender Temperatur, die zur Vermeidung eines unkontrollierten Austretens des Fluids aus dem Türbetätiger angemessen ist, auslöst.

Das Riegelelement ist aus seiner Halteposition in eine Freigabeposition bewegbar. Im Grundzustand, also wenn das Auslöseelement nicht ausgelöst wurde, befindet sich das Riegelelement in seiner Halteposition und hält dabei das zweite Montageelement. Wenn mehrere zweite Montageelemente, insbesondere Buchsen, vorgesehen sind, kann auch ein Riegelelement mehrere zweite Montageelemente halten. In der Freigabeposition gibt das Riegelelement das zweite Montageelement frei, so dass sich die beiden Montageelemente (erstes und zweites Montageelement) voneinander lösen können. Dadurch löst sich auch der Türbetätiger von der Montagefläche, insbesondere Tür, Zarge oder Wand.

Das Auslöseelement ist dazu ausgebildet, bei thermischer Aktivierung die Bewegung des Riegelelements in seine Freigabeposition freizugeben. Dabei ist insbesondere vorgesehen, dass das Auslöseelement diese Bewegung nur freigibt und keine Kraft auf das Riegelelement zur Bewegung desselben ausübt. Nach der Freigabe durch das Auslöseelement kann das Riegelelement dann schwerkraftbelastet und/oder durch ein sog. "Antriebselement" in seine Freigabeposition bewegt werden.

In einer alternativen nicht erfindungsgemässen Ausgestaltung ist es jedoch auch möglich, dass das Auslöseelement bei thermischer Aktivierung das Riegelelement in die Freigabeposition bewegt. Dies ist insbesondere möglich, indem das Auslöseelement ein thermisch intumeszierendes Material umfasst. Dieses thermisch intumeszierende Material dehnt sich bei entsprechender Erwärmung aus. Diese Ausdehnung des Materials kann dazu genutzt werden, das Riegelelement in die gewünschte Richtung zu bewegen. Bei dieser Ausgestaltung ist das Riegelelement in seiner Halteposition vorzugsweise über ein mechanisches Blockierelement blockiert. Dieses mechanische Blockierelement ist lösbar, so dass es sich löst, wenn das Auslöseelement bei thermischer Aktivierung das Riegelelement in die Freigabeposition bewegt, insbesondere drückt. Für die Lösbarkeit kann das Blockierelement insbesondere deformierbar und/oder zerstörbar und/oder anderweitig auf Zug oder Druck lösbar sein.

Erfindungsgemäß und im Weiteren beschrieben wird allerdings die Variante, bei der das Auslöseelement das Riegelelement lediglich freigibt und die Bewegung des Riegelelements anderweitig, insbesondere schwerkraftbelastet und/oder durch das Antriebselement, erfolgt.

Erfindungsgemäß ist vorgesehen, dass das Auslöseelement zwischen Riegelelement und erstem Montageelement angeordnet, insbesondere eingeklemmt, ist, um eine Bewegung des Riegelelements in die Freigabeposition zu blockieren. Hierzu ist insbesondere vorgesehen, dass das Auslöseelement bei thermischer Belastung zerstörbar und/oder deformierbar und/oder schmelzbar ist.

Eine beispielhafte Ausgestaltung für das Auslöseelement ist die oben beschriebene Glasampulle. Ein weiteres Beispiel ist eine schmelzbare Legierung oder ein entsprechend schmelzbarer bzw. thermisch deformierbarer Kunststoff.

Vorzugsweise ist das Auslöseelement mittels einer Ausgleichsfeder zwischen erstem Montageelement und Riegelelement eingeklemmt. Durch diese Ausgleichsfeder wird eine zu starke Einklemmung bzw. ein ungewolltes Zerstören des Auslöseelements vermieden.

Vorzugsweise ist eine Schraube vorgesehen, mittels der das Auslöseelement gegen die Ausgleichsfeder gespannt werden kann.

Das Riegelelement sitzt vorzugsweise in einer Aussparung des ersten Montageelements. Vorzugsweise ist die Aussparung zur Aufnahme des Riegelelements zumindest abschnittsweise taschenförmig ausgestaltet und ist somit auf einer der beiden zur Montageachse senkrechten Seiten verschlossen.

Das Riegelelement in seiner Halteposition und das zweite Montageelement greifen vorzugsweise formschlüssig ineinander. Bei Ausgestaltung des zweiten Montageelements als Platte ist bevorzugt vorgesehen, dass das zweite Montageelement einen Plattenkörper aufweist, von dem sich in Richtung Montagefläche zumindest ein Formschlusselement erstreckt. Dieses Formschlusselement sitzt vorzugsweise in einer entsprechenden Aussparung der als Platte ausgebildeten ersten Montageelemente. In der Halteposition greift das Riegelelement vorzugsweise in das zugehörige Formschlusselement ein.

Bei Verwendung mehrerer zweiter Montageelemente, beispielsweise ausgebildet als Buchsen, ist bevorzugt vorgesehen, dass die zweiten Montageelemente an ihrem Außenumfang eine Nut aufweisen. In diese Nut kann ein gabelförmiger Abschnitt des Riegelelements eingreifen, so dass das zweite Montageelement gegen Herausfallen gesichert ist. Ferner kann der Außenumfang in der Nut unrund sein, insbesondere einen Mehrkant aufweisen, sodass der gabelförmigere Abschnitt des Riegelelements die Buchse auch gegen Verdrehen sichert.

In bevorzugter Ausführung ist vorgesehen, dass die Verbindungsanordnung das vorab schon erwähnte Antriebselement umfasst. Dieses Antriebselement umfasst insbesondere ein thermisch intumeszierendes Material und/oder eine Feder. Das Antriebselement ist zum Bewegen des Riegelelements in die Freigabeposition ausgebildet. Das Antriebselement bewegt somit das Riegelelement insbesondere in einer zur Montageachse senkrechten Richtung.

Sobald das Auslöseelement ausgelöst hat, entfällt die Blockierung des Riegelelements. Dadurch kann das Antriebselement, sei es durch thermisch intumeszierendes Material und/oder eine Feder, das Riegelelement in die Freigabeposition bewegen.

Das Antriebselement sitzt vorzugsweise in einer Aussparung des ersten Montageelements und/oder in einer Aussparung des zweiten Montageelements. Um ein möglichst großes Antriebselement, insbesondere mit thermisch intumeszierendem Material einzusetzen, ist bevorzugt vorgesehen, dass die beiden Aussparungen in den beiden Montageelementen miteinander fluchten, so dass das Antriebselement in beiden als Platten ausgebildeten Montageelementen angeordnet werden kann. Dabei ist dann auch bevorzugt vorgesehen, dass sich das Riegelelement in die Aussparung des zweiten Montageelements erstreckt, so dass das Antriebselement über eine möglichst große Fläche am Riegelelement angreifen kann.

Des Weiteren ist bevorzugt ein Ablöseelement vorgesehen. Das Ablöseelement kann ebenfalls ein thermisch intumeszierendes Material und/oder eine Feder umfassen. Das Ablöseelement ist dazu angeordnet, die beiden Montageelemente voneinander wegzudrücken. Im Wesentlichen führt das Ablöseelement eine Bewegung parallel zur Montageachse aus. Das Ablöseelement kann dabei unmittelbar auf die beiden Montageelemente einwirken und diese auseinanderdrücken. Allerdings ist es auch möglich, dass das Ablöseelement an der Rückseite sich direkt gegen die Montagefläche stützt. Genauso kann sich das Ablöseelement auf der Vorderseite unmittelbar gegen den Türbetätiger abstützen. Eine wesentliche Funktion des Ablöseelementes ist es, dass nach Bewegung des Riegelelements sich der Türbetätiger von der Montagefläche wegbewegt.

Für einen kompakten Aufbau ist bevorzugt vorgesehen, dass das Ablöseelement in einer Aussparung des ersten Montageelements und/oder in einer Aussparung des zweiten Montageelements befindet.

Des Weiteren ist bevorzugt vorgesehen, dass für das Ablöseelement ein thermisch intumeszierendes Material verwendet wird, das erst bei einer höheren Temperatur auslöst als das thermische intumeszierende Material, das bei dem Antriebselement zur Anwendung kommt.

Wie bereits beschrieben, ist bevorzugt vorgesehen, dass das erste Montageelement als Platte ausgebildet ist. In bevorzugter Ausführung ist auch das zweite Montageelement als Platte ausgebildet. Die beiden Platten weisen jeweils eine Innenfläche auf, die aneinander anliegen. Das erste Montageelement bildet eine Rückfläche, die an der Montagefläche, insbesondere Tür, Zarge oder Wand, zur Anlage kommt. Das zweite Montageelement bildet eine Vorderfläche, an der der Türbetätiger befestigt wird.

Alternativ zur Ausgestaltung des zweiten Montageelements als Platte ist bevorzugt vorgesehen, dass mehrere zweite Montageelemente vorgesehen sind. Diese mehreren zweiten Montageelemente sind vorzugsweise jeweils als Buchse ausgebildet. Die Buchsen weisen vorzugsweise ein Innengewinde auf. Über dieses Innengewinde kann der Türbetätiger an die zweiten Montageelemente geschraubt werden.

Alternativ zu der Ausgestaltung als Buchsen könnten die zweiten Montageelemente beispielsweise auch als Gewindestifte ausgebildet sein, die aus dem ersten Montageelement hervorstehen.

Die Montagekonsole, unabhängig davon, ob das zweite Montageelement als Platte ausgebildet ist oder nicht, weist vorzugsweise eine Dicke von max. 60 mm, insbesondere max. 40 mm, auf. Durch diese relativ dünne Ausgestaltung ergibt sich ein Erscheinungsbild wie bei einer normalen Montageplatte. Die Dicke wird insbesondere von der Rückfläche zur Vorderfläche gemessen. Etwaige Positionierungsfortsätze oder sonstige Elemente, auf die Türbetätiger aufgesteckt wird, bleiben dabei unberücksichtigt.

Die Erfindung umfasst ferner eine Anordnung, umfassend die beschriebene Montagekonsole und einen Türbetätiger. Der Türbetätiger ist dabei insbesondere an dem zweiten Montageelement bzw. an den mehreren zweiten Montageelementen befestigt. Vorzugsweise ist die Montagekonsole an einer Montagefläche, insbesondere Tür, Zarge oder Wand, befestigt.

Die Erfindung wird nun anhand von Ausführungsbeispielen näher beschrieben. Dabei zeigen:
- Fig. 1: eine erfindungsgemäße Anordnung mit erfindungsgemäßer Montagekonsole gemäß einem ersten Ausführungsbeispiel,
- Fig. 2: eine Rückfläche der erfindungsgemäßen Montagekonsole gemäß dem ersten Ausführungsbeispiel,
- Fig. 3: eine Innenfläche des zweiten Montageelements der erfindungsgemäßen Montagekonsole gemäß dem ersten Ausführungsbeispiel,
- Fig. 4: eine Innenfläche des ersten Montageelements der erfindungsgemäßen Montagekonsole gemäß dem ersten Ausführungsbeispiel,
- Fig. 5: den in Fig. 2 gekennzeichneten Schnitt A-A,
- Fig. 6: den in Fig. 2 gekennzeichneten Schnitt B-B,
- Fig. 7: eine schematische Ansicht der erfindungsgemäßen Montagekonsole gemäß dem ersten Ausführungsbeispiel beim Ablösen des Türbetätigers,
- Fig. 8: eine Rückfläche einer erfindungsgemäßen Montagekonsole gemäß einem zweiten Ausführungsbeispiel,
- Fig. 9: den in Fig. 8 gekennzeichneten Schnitt C-C,
- Fig. 10: eine weitere Schnittansicht der erfindungsgemäßen Montagekonsole gemäß dem zweiten Ausführungsbeispiel,
- Fig. 11: den in Fig. 8 gekennzeichneten Schnitt D-D,
- Fig. 12: eine erste Variante zum zweiten Ausführungsbeispiel,
- Fig. 13: eine zweite Variante zum zweiten Ausführungsbeispiel.

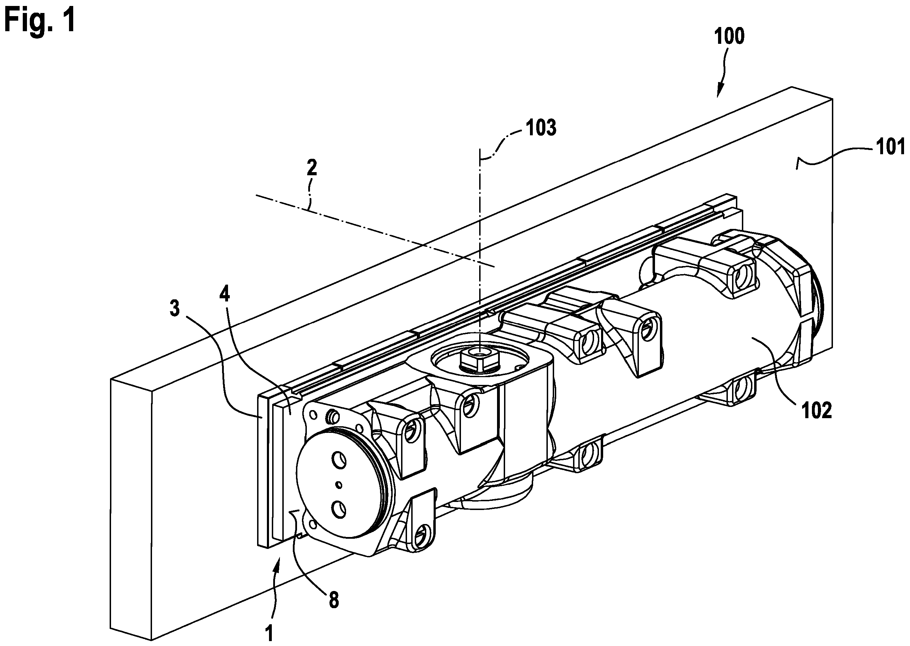

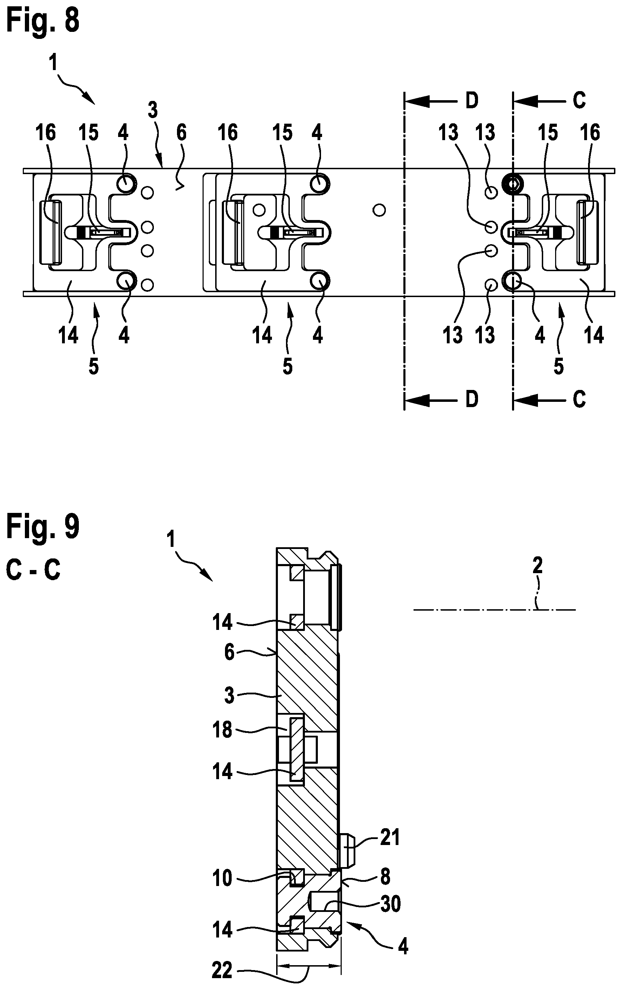

Im Folgenden wird eine Anordnung 100 sowie eine Montagekonsole 1 anhand der Figuren im Detail beschrieben. Fig. 1 bis 7 zeigen die Ausgestaltung nach einem ersten Ausführungsbeispiel. Fig. 8 bis 13 zeigen ein zweites Ausführungsbeispiel der Montagekonsole 1.

Zur Beschreibung des ersten Ausführungsbeispiels wird auf die Fig. 1 bis 7 Bezug genommen. Fig. 1 zeigt rein schematisch eine Montagefläche 101 der Anordnung 100. Diese Montagefläche 101 ist beispielsweise durch eine Tür, Zarge oder Wand gebildet. Senkrecht zu der Montagefläche 101 ist eine Montageachse 2 definiert. Auf die Montagefläche 101 ist die Montagekonsole 1 befestigt. Auf die Montagekonsole 1 wiederum ist der Türbetätiger 102 montiert. Der Türbetätiger 102, hier ausgebildet als Türschließer, weist eine Abtriebsachse 103 auf. Die Abtriebsachse 103 steht senkrecht zur Montageachse 2. Die Montageachse 2 steht senkrecht zur Montagefläche 101.

Die Montagekonsole 1 umfasst ein erstes Montageelement 3 und ein zweites Montageelement 4. Das erste Montageelement 3 liegt mit seiner Rückfläche 6 an der Montagefläche 101 an. Die beiden Innenflächen 7 der beiden Montageelemente 3, 4 liegen aneinander an. Die Vorderfläche 8 des zweiten Montageelements 4 dient zur Aufnahme des Türbetätigers 102.

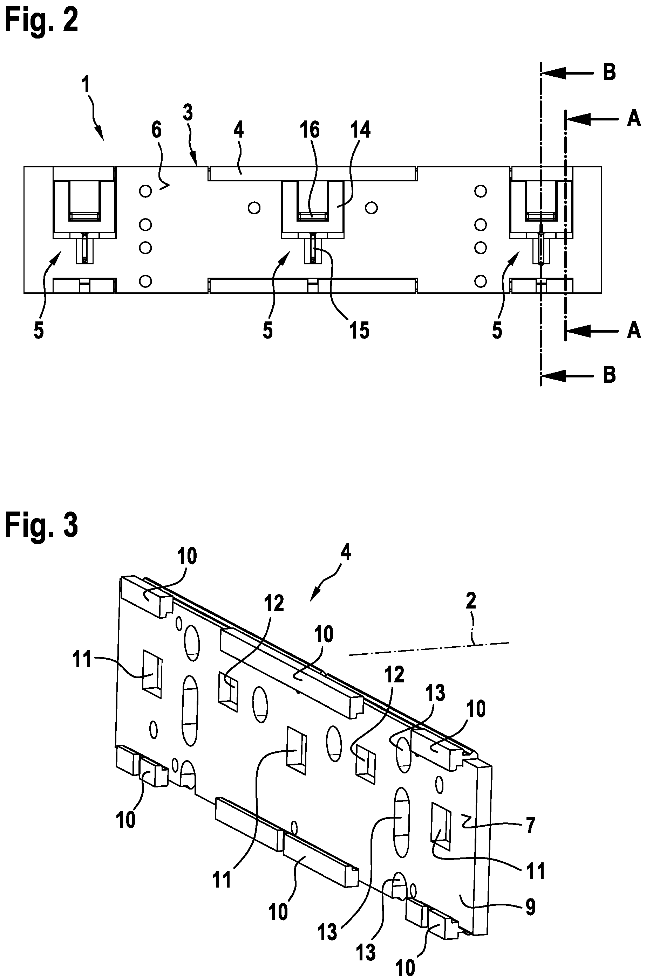

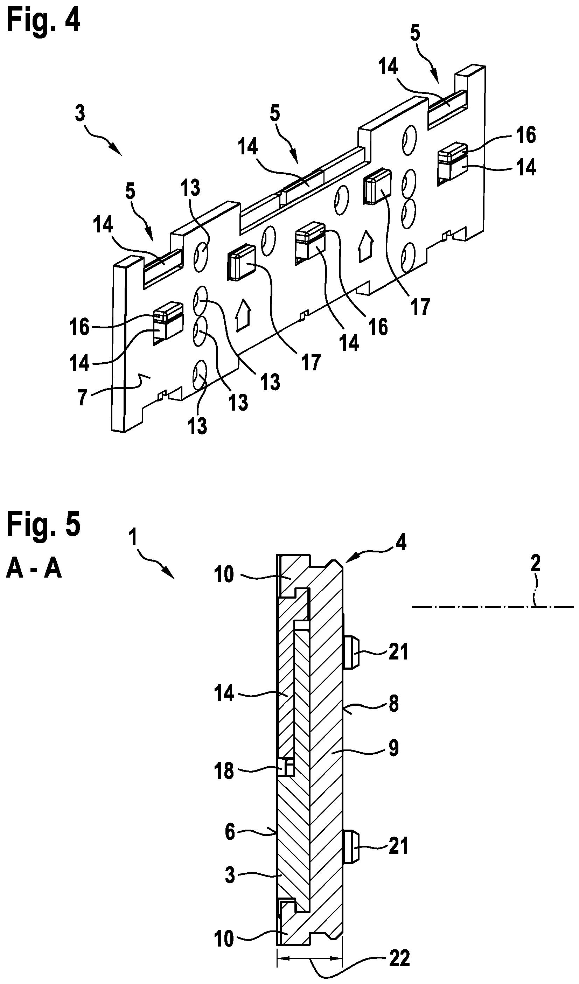

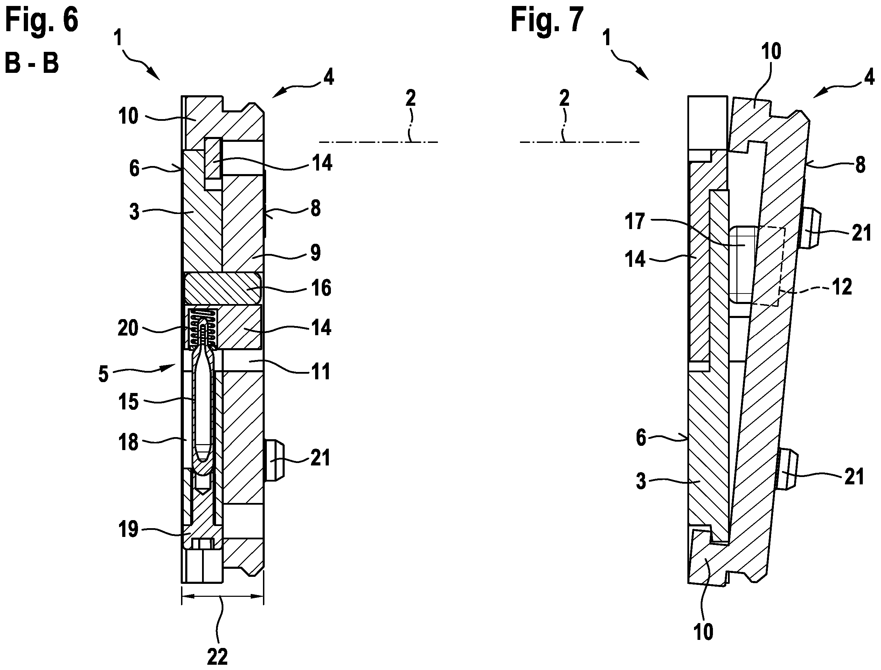

Fig. 2 zeigt die Rückfläche 6 der Montagekonsole 1. Fig. 3 zeigt die Innenfläche 7 des zweiten Montageelements 4. Fig. 4 zeigt die Innenfläche 7 des ersten Montageelements 3. Fig. 5 zeigt den in Fig. 2 gekennzeichneten Schnitt A-A und Fig. 6 den in Fig. 2 gekennzeichneten Schnitt B-B. Fig. 7 zeigt eine schematische Ansicht der Montagekonsole 1 beim Ablösen des Türbetätigers 102.

Die beiden Montageelemente 3, 4 sind jeweils plattenförmig ausgebildet und stehen senkrecht zur Montageachse 2. Die beiden Montageelemente 3, 4 sind über drei Verbindungsanordnungen 5 miteinander verbunden.

Das zweite Montageelement 4, beispielsweise gemäß der Darstellung in Fig. 3, weist einen Plattenkörper 9 auf. Von diesem Plattenkörper 9 aus erstrecken sich in Richtung des ersten Montageelements 3 mehrere Formschlusselemente 10.

Des Weiteren weist der Plattenkörper 9 mehrere erste Aussparungen 11 auf. Diese ersten Aussparungen 11 sind Durchgangsaussparungen.

Ferner weist der Plattenkörper 9 mehrere zweite Aussparungen 12, ausgebildet als Taschen, auf. Die zweiten Aussparungen 12 sind an der Innenfläche 7 offen.

Der Plattenkörper 9 des zweiten Montageelements 4 und das erste Montageelement 3 umfassen mehrere Montageöffnungen 13. Diese Montageöffnungen 13 sind Durchgangsaussparungen, insbesondere Durchgangslöcher, die sich fluchtend durch beide Montageelement 3, 4 erstrecken. Bei Einbau der Montagekonsole sind die beiden Montageelemente 3, 4 insbesondere bereits miteinander verbunden. Die Schrauben zur Befestigung an der Montagefläche 101 werden von der Vorderseite 8 durch beide Montageelemente 3, 4 gesetzt. Die Montageöffnungen 13 im zweiten Montageelement 4 sind entsprechend groß und werden als Werkzeugöffnungen benutzt, so dass mittels der Schrauben lediglich das erste Montageelement 3 an der Montagefläche 101 befestigt wird.

Die einzelne Verbindungsanordnung 5 umfasst jeweils ein Riegelelement 14. Im gezeigten Ausführungsbeispiel ist das einzelne Riegelelement 14 U-förmig ausgestaltet. Das Riegelelement 14 befindet sich in einer dritten Aussparung 13 in dem plattenförmigen ersten Montageelement 3. In dieser dritten Aussparung 18 ist das Riegelelement 14 senkrecht zur Montageachse 2 linear beweglich.

Fig. 2 zeigt beispielsweise die Riegelelemente 14 in ihrer Halteposition. Dabei greifen die Riegelelemente 14 formschlüssig in die Formschlusselemente 10 des zweiten Montageelements 4 ein.

In jeder Verbindungsanordnung 5 ist ein Auslöseelement 15 vorgesehen. Dieses Auslöseelement 15 ist hier als Glasampulle ausgebildet. Das Auslöseelement 15 hält das zugehörige Riegelelement 14 in der oberen Halteposition. Des Weiteren befindet sich in der dritten Aussparung 18 pro Verbindungsanordnung 5 ein Antriebselement 16. Das jeweilige Antriebselement 16 ist zwischen Riegelelement 14 und erstem Montageelement 3 angeordnet. Das Antriebselement 16 ist hier aus einem thermisch intumeszierenden Material gebildet.

Wie beispielsweise die Schnittansicht in Fig. 6 zeigt, setzt sich die dritte Aussparung 18 im ersten Montageelement 3 in die erste Aussparung 11 im zweiten Montageelement 4 fort. Dadurch können sich das Riegelelement 14 und das Antriebselement 16 in beide Aussparungen 18, 11 erstrecken.

Ebenso zeigt die Schnittansicht in Fig. 6, dass das Auslöseelement 15 mittels einer Stellschraube 19 gegen eine Ausgleichsfeder 20 gespannt ist. Dadurch ist das Auslöseelement 15 zwischen Riegelelement 15 und erstem Montageelement 3 eingeklemmt.

In der zweiten Aussparung 12 des zweiten Montageelements 4 befindet sich ein Ablöseelement 17 (siehe Fig. 4), hier ebenfalls ausgebildet als thermisch intumeszierendes Material.

Bei entsprechender thermischer Belastung wird das Auslöseelement 15 zerstört. Ferner expandiert das Antriebselement 16 durch die thermische Einwirkung und drückt dabei das Riegelelement 14 nach unten. Der Formschluss zwischen den beiden Montageelementen 3, 4 löst sich. Wie Fig. 7 schematisch verdeutlicht, expandiert im nächsten Schritt das Ablöseelement 17 und drückt dabei die beiden Montageelemente 3, 4 in Richtung parallel zur Montageachse 2 auseinander. Dadurch kommt es zum Ablösen des Türbetätigers 102 von der Montagefläche 101.

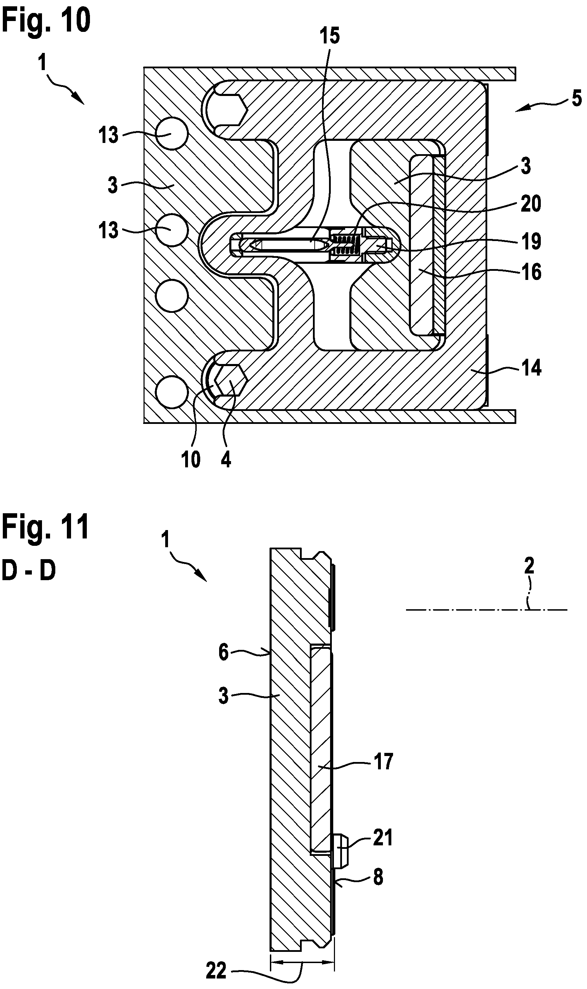

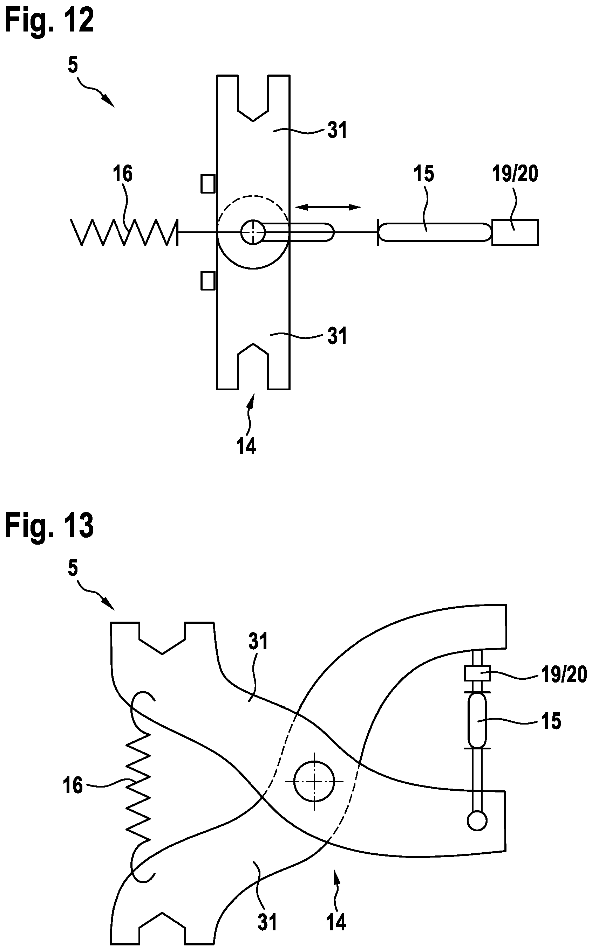

Zum zweiten Ausführungsbeispiel zeigt Fig. 8 die Rückfläche 6 der Montagekonsole 1. Fig. 9 zeigt den in Fig. 8 gekennzeichneten Schnitt C-C. In Fig. 10 ist eine weitere Schnittansicht zu einem parallel zur Zeichenebene der Fig. 8 liegendem Schnitt gezeigt. Fig. 11 zeigt den in Fig. 8 gekennzeichneten Schnitt D-D. Fig. 12 und 13 zeigen Varianten zum zweiten Ausführungsbeispiel.

Im zweiten Ausführungsbeispiel werden die Riegelelemente 14 nicht von oben nach unten, sondern in horizontaler Richtung bewegt. Fig. 8 zeigt hierzu die Rückfläche 6 der Montagekonsole 1. Die Halteelemente 14 befinden sich in der Halteposition. Das zweite Montageelement 4 ist nicht als Platte ausgebildet. Vielmehr werden hier mehrere zweite Montageelemente 4, im konkreten Beispiel sechs Stück, verwendet. Die einzelnen zweiten Montageelemente 4 sind als Buchsen mit Innengewinde 30 ausgebildet. Diese Buchsen stecken in dem plattenförmigen ersten Montageelement 3. In der Darstellung nach Fig. 8 ist das obere rechte zweite Montageelement 4 ausgeblendet.

Die als Buchsen ausgebildeten zweiten Montageelemente 4 weisen eine Nut, vorzugsweise mit unrundem Querschnitt, auf. Dieser Bereich dient als Formschlusselement 10. Entsprechend gabelförmige Bereiche der Riegelelemente 14 greifen in diese Formschlusselemente 10 ein. Dadurch sind die zweiten Montageelemente 4 gegen Verdrehen und gegen Herausfallen gesichert.

Der Türbetätiger 102 wird direkt oder über ein weiteres plattenförmiges Element mit den buchsenförmigen zweiten Montageelementen 4 verbunden, insbesondere verschraubt. Lösen sich die zweiten Montageelemente 4 aus dem ersten Montageelement 3, fällt auch der Türbetätiger 102 ab.

Wie beispielsweise Fig. 10 verdeutlicht, stützt sich auch im zweiten Ausführungsbeispiel das Auslöseelement 15 zwischen Riegelelement 14 und erstem Montageelement 3 ab. Hierzu ist wieder eine Stellschraube 19 vorgesehen, die ein Spannen des Auslöseelements 15 gegen eine Ausgleichsfeder 20 ermöglicht.

Das Antriebselement 16 ist wiederum aus thermisch intumeszierendem Material gebildet und drückt bei entsprechender thermischer Belastung und daraus resultierender Expansion das Riegelelement 14 in seine Freigabeposition.

Fig. 11 zeigt die Anordnung des Ablöseelements 17 in einer entsprechenden Aussparung im ersten Montageelement 3. Mit diesem Ablöseelement 17 wird unmittelbar der Türbetätiger 102 von dem ersten Montageelement 3 weggedrückt.

Die Schnittansichten in beiden Ausführungsbeispielen zeigen die Definition der Dicke 22 der Montagekonsole 1 parallel zur Montageachse 2. Etwaige Positionierfortsätze 21, auf die der Türbetätiger 102 aufgesteckt wird, bleiben bei der Betrachtung der Dicke 22 außen vor.

Fig. 12 zeigt eine Variante zur Ausgestaltung der Verbindungsanordnung 5 im zweiten Ausführungsbeispiel. Anstatt eines steifen Riegelelements 14 wird hier ein Riegelelement 14 mit zwei zueinander drehbar gelagerten Hebeln 31 verwendet. Rein schematisch zeigt Fig. 12, dass bei Auslösen des Auslöseelements 15 über ein entsprechendes Antriebselement 16 der Drehpunkt zwischen diesen beiden Hebeln 31 verschoben werden kann, wodurch sich das Riegelelement 14 in seine Freigabeposition bewegt - die gabelförmigen Abschnitte der beiden Hebel 31 lösen sich von den zweiten Montagelementen 4.

Fig. 13 zeigt eine weitere rein schematisch dargestellte Variante zum zweiten Ausführungsbeispiel. Hier ist das Riegelelement 14 wiederum durch zwei zueinander drehbare Hebel 31 gebildet. Die Drehachse der beiden Hebel 31 ist ortsfest. Auf einer Seite der Drehachse sind die beiden Hebel 31 über das Auslöseelement 15 verbunden. Wenn das Auslöseelement 15 diese beiden Enden der beiden Hebel 31 nicht mehr auf Abstand hält, kann auf der gegenüberliegenden Seite der Drehachse das Antriebselement 16, hier ausgebildet als Feder, die beiden Enden mit den gabelförmigen Ausgestaltungen zusammenziehen, so dass sich das Riegelelement 14 in seine Freigabeposition bewegt.

### Bezugszeichenliste

- 1: Montagekonsole
- 2: Montageachse
- 3: erstes Montageelement
- 4: zweites Montageelement
- 5: Verbindungsanordnung
- 6: Rückfläche
- 7: Innenflächen
- 8: Vorderfläche
- 9: Plattenkörper
- 10: Formschlusselement
- 11: erste Aussparung
- 12: zweite Aussparung
- 13: Montageöffnungen
- 14: Riegelelement
- 15: Auslöseelement
- 16: Antriebselement
- 17: Ablöseelement
- 18: dritte Aussparung
- 19: Stellschraube
- 20: Ausgleichsfeder
- 21: Positionierfortsatz
- 22: Dicke
- 30: Innengewinde
- 31: Hebel
- 100: Anordnung
- 101: Montagefläche
- 102: Türbetätiger
- 103: Abtriebsachse

## Patentansprüche

1. Montagekonsole (1) für einen Türbetätiger (102), umfassend
• ein erstes Montagelement (3) und ein zweites Montagelement (4), wobei eines der beiden Montageelemente (3) zur Befestigung an einer Montagefläche (101), insbesondere Tür, Zarge oder Wand, ausgebildet ist und das andere Montageelemente (4) zur Aufnahme des Türbetätigers (102) ausgebildet ist,
• zumindest eine Verbindungsanordnung (5) mit einem am ersten Montageelement (3) beweglich angeordneten Riegelelement (14) und einem thermisch aktivierbaren Auslöseelement (15),
• wobei das Riegelelement (14) aus einer Halteposition in eine Freigabeposition bewegbar ist, wobei das Riegelelement (14) in der Halteposition das zweite Montagelement (4) hält und in der Freigabeposition das zweite Montagelement (4) freigibt,
• und wobei das Auslöseelement (15) bei thermischer Aktivierung eine Bewegung des Riegelelements (14) in die Freigabeposition freigibt und/oder das Auslöseelement (15) bei thermischer Aktivierung das Riegelelement (14) in die Freigabeposition bewegt,
**dadurch gekennzeichnet, dass** das Auslöseelement (15) zwischen Riegelelement (14) und erstem Montagelement (3) angeordnet, insbesondere eingeklemmt, ist, um eine Bewegung des Riegelelements (14) in die Freigabeposition zu blockieren.

2. Montagekonsole nach einem der vorhergehenden Ansprüche, wobei das Auslöseelement (15) bei thermischer Belastung zerstörbar und/oder deformierbar und/oder schmelzbar ist.

3. Montagekonsole nach einem der vorhergehenden Ansprüche, wobei das Riegelelement (14) in einer Aussparung (18) des ersten Montageelements (3) aufgenommen ist.

4. Montagekonsole nach einem der vorhergehenden Ansprüche, wobei das Riegelelement (14) in seiner Halteposition und das zweite Montageelement (4) formschlüssig ineinandergreifen.

5. Montagekonsole nach einem der vorhergehenden Ansprüche, wobei die Verbindungsanordnung (5) ein Antriebselement (16), insbesondere mit thermisch intumeszierendem Material und/oder einer Feder, zum Bewegen des Riegelelements (14) in die Freigabeposition umfasst.

6. Montagekonsole nach einem der vorhergehenden Ansprüche, wobei das Antriebselement (16) in einer Aussparung (18) des ersten Montageelements (3) und/oder in einer Aussparung (11) des zweiten Montageelements (4) angeordnet ist.

7. Montagekonsole nach einem der vorhergehenden Ansprüche, wobei ein Ablöseelement (17) vorgesehen ist, wobei das Ablöseelement (17) insbesondere ein thermisch intumeszierendem Material und/oder einer Feder umfasst, wobei das Ablöseelement (17) dazu angeordnet ist, um das erste und zweite Montageelement (3, 4) voneinander wegzudrücken.

8. Montagekonsole nach Anspruch 7, wobei das Ablöseelement (17) in einer Aussparung des ersten Montageelements (3) und/oder in einer Aussparung (12) des zweiten Montageelements (4) angeordnet ist.

9. Montagekonsole nach einem der vorhergehenden Ansprüche, wobei das erste Montageelement (3) als Platte ausgebildet ist.

10. Montagekonsole nach einem der vorhergehenden Ansprüche, wobei das zweite Montageelement (4) als Platte ausgebildet ist.

11. Montagekonsole nach einem der Ansprüche 1 bis 9, wobei mehrere zweite Montageelemente (4) vorgesehen sind, die zur Aufnahme des Türbetätigers (102) und/oder zur Befestigung an der Montagefläche (101) ausgebildet sind.

12. Montagekonsole nach Anspruch 11, wobei die mehreren zweiten Montageelemente (4), vorzugsweise ausgebildet als Buchsen mit Innengewinde (30), im ersten Montagelement (3) stecken.

13. Montagekonsole nach einem der vorhergehenden Ansprüche, wobei die Montagekonsole (1) eine Dicke (22) von maximal 60 mm, vorzugsweise maximal 40 mm, aufweist.

14. Anordnung (100) umfassend eine Montagekonsole (1) nach einem der vorhergehenden Ansprüche und einen Türbetätiger (102), der an der Montagekonsole (1) befestigt ist.

## Claims

1. A mounting bracket (1) for a door actuator (102), comprising
• a first mounting element (3) and a second mounting element (4), wherein one of the two mounting elements (3) is designed for fastening to a mounting surface (101), in particular a door, frame or wall, and the other mounting element (4) is designed to receive the door actuator (102),
• at least one connection arrangement (5) with a bolt element (14) arranged movably on the first mounting element (3) and a thermally activatable trigger element (15),
• wherein the bolt element (14) can be moved from a holding position into a release position, wherein the bolt element (14) holds the second mounting element (4) in the holding position and releases the second mounting element (4) in the release position,
• and wherein the trigger element (15) releases a movement of the bolt element (14) into the release position upon thermal activation and/or the trigger element (15) moves the bolt element (14) into the release position upon thermal activation,
**characterised in that**
the trigger element (15) is arranged, in particular clamped, between the bolt element (14) and the first mounting element (3) in order to block a movement of the bolt element (14) into the release position.

2. The mounting bracket according to one of the preceding claims, wherein the trigger element (15) is destructible and/or deformable and/or fusible under thermal stress.

3. The mounting bracket according to one of the preceding claims, wherein the bolt element (14) is received in a recess (18) of the first mounting element (3).

4. The mounting bracket according to one of the preceding claims, wherein the bolt element (14), in its holding position, and the second mounting element (4) engage in a form-fitting manner with one another.

5. The mounting bracket according to one of the preceding claims, wherein the connection arrangement (5) comprises a drive element (16), in particular with thermally intumescent material and/or a spring, for moving the bolt element (14) into the release position.

6. The mounting bracket according to one of the preceding claims, wherein the drive element (16) is arranged in a recess (18) of the first mounting element (3) and/or in a recess (11) of the second mounting element (4).

7. The mounting bracket according to one of the preceding claims, wherein a detaching element (17) is provided, wherein the detaching element (17) comprises in particular a thermally intumescent material and/or a spring, wherein the detaching element (17) is arranged to push the first and second mounting elements (3, 4) away from each other.

8. The mounting bracket according to claim 7, wherein the detaching element (17) is arranged in a recess of the first mounting element (3) and/or in a recess (12) of the second mounting element (4).

9. The mounting bracket according to one of the preceding claims, wherein the first mounting element (3) is designed as a plate.

10. The mounting bracket according to one of the preceding claims, wherein the second mounting element (4) is designed as a plate.

11. The mounting bracket according to one of claims 1 to 9, wherein a plurality of second mounting elements (4) are provided, which are designed for receiving the door actuator (102) and/or for fastening to the mounting surface (101).

12. The mounting bracket according to claim 11, wherein the plurality of second mounting elements (4), preferably designed as bushes with internal threads (30), are inserted in the first mounting element (3).

13. The mounting bracket according to one of the preceding claims, wherein the mounting bracket (1) has a thickness (22) of at most 60 mm, preferably at most 40 mm.

14. An arrangement (100) comprising a mounting bracket (1) according to one of the preceding claims and a door actuator (102) fastened to the mounting bracket (1).

## Revendications

1. Console de montage (1) pour un actionneur de porte (102), comprenant
• un premier élément de montage (3) et un second élément de montage (4), dans laquelle l'un des deux éléments de montage (3) est réalisé pour une fixation sur une surface de montage (101), en particulier une porte, un châssis ou un mur, et l'autre élément de montage (4) est réalisé pour la réception de l'actionneur de porte (102),
• au moins un agencement de liaison (5) comportant un élément de verrouillage (14) agencé de manière mobile sur le premier élément de montage (3) et un élément de déclenchement (15) thermiquement activable,
• dans laquelle l'élément de verrouillage (14) peut être placé en mouvement d'une position de maintien dans une position de libération, dans laquelle l'élément de verrouillage (14) maintient le seconde élément de montage (4) dans la position de maintien et libère le second élément de montage (4) dans la position de libération,
• et dans laquelle l'élément de déclenchement (15) libère un mouvement de l'élément de verrouillage (14) dans la position de libération lors de l'activation thermique et/ou l'élément de déclenchement (15) place en mouvement l'élément de verrouillage (14) dans la position de libération lors de l'activation thermique,
**caractérisée en ce que**
l'élément de déclenchement (15) est agencé, en particulier serré, entre l'élément de verrouillage (14) et le premier élément de montage (3), pour bloquer un mouvement de l'élément de verrouillage (14) dans la position de libération.

2. Console de montage selon l'une des revendications précédentes, dans laquelle l'élément de déclenchement (15) est destructible et/ou déformable et/ou fusible sous contrainte thermique.

3. Console de montage selon l'une des revendications précédentes, dans laquelle l'élément de verrouillage (14) est logé dans un évidement (18) du premier élément de montage (3).

4. Console de montage selon l'une des revendications précédentes, dans laquelle l'élément de verrouillage (14) dans sa position de maintien et le second élément de montage (4) viennent en prise l'un dans l'autre par complémentarité de forme.

5. Console de montage selon l'une des revendications précédentes, dans laquelle l'agencement de liaison (5) comprend un élément d'entraînement (16), en particulier avec un matériau thermiquement intumescent et/ou un ressort, pour un mouvement de l'élément de verrouillage (14) dans la position de libération.

6. Console de montage selon l'une des revendications précédentes, dans laquelle l'élément d'entraînement (16) est agencé dans un évidement (18) du premier élément de montage (3) et/ou dans un évidement (11) du second élément de montage (4).

7. Console de montage selon l'une des revendications précédentes, dans laquelle un élément de décollement (17) est prévu, dans lequel l'élément de décollement (17) comprend en particulier un matériau thermiquement intumescent et/ou un ressort, dans lequel l'élément de décollement (17) est agencé pour écarter les premier et second éléments de montage (3, 4) l'un de l'autre.

8. Console de montage selon la revendication 7, dans laquelle l'élément de décollement (17) est agencé dans un évidement du premier élément de montage (3) et/ou dans un évidement (12) du second élément de montage (4).

9. Console de montage selon l'une des revendications précédentes, dans laquelle le premier élément de montage (3) est réalisé sous la forme d'une plaque.

10. Console de montage selon l'une des revendications précédentes, dans laquelle le second élément de montage (4) est réalisé sous la forme d'une plaque.

11. Console de montage selon l'une des revendications 1 à 9, dans laquelle plusieurs seconds éléments de montage (4) sont prévus, qui sont réalisés pour une réception de l'actionneur de porte (102) et/ou pour une fixation sur la surface de montage (101).

12. Console de montage selon la revendication 11, dans laquelle les plusieurs seconds éléments de montage (4), de préférence réalisés sous forme de douilles avec un filetage intérieur (30), sont enfichés dans le premier élément de montage (3).

13. Console de montage selon l'une des revendications précédentes, dans laquelle la console de montage (1) présente une épaisseur (22) d'au plus 60 mm, de préférence d'au plus 40 mm.

14. Agencement (100) comprenant une console de montage (1) selon l'une des revendications précédentes et un actionneur de porte (102) qui est fixé à la console de montage (1).
